# EUROPEAN PATENT APPLICATION

(11) **EP 3 147 787 A1**
(43) Date of publication of application: **29.03.2017**
(21) Application number: 15877488.5
(22) Date of filing: 30.01.2015
(51) Int. Cl.: G06F 9/52

(54) **METHOD, DEVICE AND TERMINAL FOR SETTING SYSTEM DATA**

(30) Priority: 14.01.2015 CN 201510018550
(71) Applicant: Yulong Computer Telecommunication Scientific (Shenzhen) Co., Ltd., Shenzhen, Guangdong 518057 (CN)
(72) Inventor: SHENG, Jingen, Shenzhen Guangdong 518057 (CN)
(74) Representative: Johnson, Richard Alan
(86) International application number: PCT/CN2015/072019
(87) International publication number: WO 2016/112570

(57) **Abstract**

A method, device for setting system data and a terminal, the method comprising: when one of a plurality of systems receives a setting command, determining whether the setting command is a command associated with specified data in the given system; and if not, namely, the setting command is associated with common data in the given system and in other systems, then setting the common data in the given system and the other systems according to the setting command, the other systems being at least one system in the plurality of systems other than the given system (102). The method, device and terminal enable a user to perform a special setting of the specific data in different systems, and address the problem in which a common setting item (common data) cannot be completely synchronized, caused by the data in different systems being different.

## Description

### CROSS REFERENCE TO RELATED APPLICATIONS

The present application claims priority to Chinese Patent Application No. 201510018550.0, filed with the Chinese Patent Office on January 14, 2015 and entitled "METHOD, DEVICE FOR SETTING SYSTEM DATA, AND TERMINAL", the content of which is hereby incorporated by reference in its entirety.

### TECHNICAL FIELD

The present disclosure relates to the technical field of terminals, and more particularly, to a method for setting system data, a device for setting system data and a terminal.

### BACKGROUND

Currently, in some terminals, a plurality of systems are installed. However, when a user performs an ordinary setting of a certain system, for example, when performing a setting of password verification required for logging in the system, the setting is effective merely in this system, and cannot be synchronized in other systems. However, as far as common ordinary setting items of these different systems, preferences of the user is usually identical, and thus the user have to perform the setting of each of different systems.

On the other hand, as far as specific data in different systems, the user usually hopes to perform a special setting of the specific data in each system while not hoping to synchronize the setting of the specific data in the other systems.

Therefore, how to enable a user to perform a special setting of the specific data in different systems, and address the problem in which a common setting item, namely common data, cannot be completely synchronized, caused by the data in different systems being different, becomes urgent.

### SUMMARY

The present disclosure is addressed to the above-mentioned problem, and proposes a technical solution which enables a user to perform a special setting of the specific data in different systems, and addresses the problem in which a common setting item, namely common data, cannot be completely synchronized, caused by the data in different systems being different.

In view of this, according to one aspect of the present disclosure, a method for setting system data, used in a terminal in which a plurality of systems are installed, comprises: when one of the plurality of systems receives a setting command, determining whether the setting command is a command associated with specified data in the given system; and if not, namely, the setting command is associated with common data in the given system and in other systems, then setting the common data in the given system and the other systems according to the setting command, wherein the other systems are at least one system in the plurality of systems other than the given system.

In this technical solution, if one of the plurality of systems receives the setting command which is a command not associated with the specified data in the given system, the setting command is a command associated with ordinary settings in the given system or the common data in the plurality of systems, and the setting command may be synchronized in all the systems containing the common data, such that the user does not have to perform a setting of each of different systems, so as to address the problem in which a common setting item, namely common data, cannot be completely synchronized, caused by the data in different systems being different. For example, if a system A, a system B and a system C are installed in a terminal and the user performs a setting of size of fonts (common data in the three systems) in the system A, the terminal may determine that the setting command is an ordinary setting command and is not associated with specific data in the system A, when receiving the setting command. At this time, the terminal may synchronize the setting of the size of the fonts in the system B and system C, such that the size of the fonts in the three systems seems identical.

In the above-mentioned technical solution, preferably, if determining that the setting command is a command associated with the specified data in the given system, the specified data is set according to the setting command.

In this technical solution, if the setting command is a command associated with the specified data in the given system, the terminal may merely perform a special setting of the specific data (for example, unique data such as contact information, communication records and so on in the given system) in the given system, instead of synchronizing the setting command in the other systems, so as to ensure that the user may perform a special setting of the specific data in the given system and the different usage requirement of the user on different systems is met.

In the above-mentioned technical solution, preferably, determining whether the setting command is a command associated with the specified data in the given system specifically comprises: determining whether the setting command is a command associated with the specified data in the given system, according to identification information contained in the setting command.

In this technical solution, by means of the identification information contained in the setting command, a necessary basis is provided for accurately determining whether the setting command is a command associated with the specified data in the given system, and in turn, a basis is provided for determining whether to synchronize the setting command in the other systems. The identification information may be an identifier for identifying the common data and the specified data, or may be an identifier for identifying a system which the data belongs to, so as to indicate the type of the setting command.

In the above-mentioned technical solution, preferably, it is determined whether the given system has a security level lower than that of any other system in the plurality of systems, when performing a setting of each of the plurality of systems according to the setting command. And if so, the terminal user is prompted whether to perform a setting of the any other system according to the setting command.

In this technical solution, if the security of the given system is lower than that of the any other system when setting each system according to the setting command, it is required to give a prompting signal to the terminal user before the setting command is applied in the any other system, such that the user determines again whether to apply the setting command in the any other system, so as to prevent the security of a system having a higher security level from being affected due to applying the setting of a system having a lower security level in the system having a higher security level. For example, if a setting of the given system, with the result that a password is not required when accessing the system, is performed in the terminal, the terminal may determine that the setting command is an ordinary setting command not associated with the specified data in the given system, and synchronize the setting command in the other systems. However, if the security level of the any other system is higher than that of the given system, the terminal will give a prompting signal to the user, such that the user determines whether to apply the setting command in the any other system, so as to prevent the security of the any other system from being damaged.

In the above-mentioned technical solution, preferably, the specified data is updated according to the received updating command.

In this technical solution, the user may freely update the specified data in the given system and this is advantageous for improving the using experience of the user.

According to another aspect of the present disclosure, a device for setting system data, used in a terminal in which a plurality of systems are installed, comprises: a determination unit for, when one of the plurality of systems receives a setting command, determining whether the setting command is a command associated with specified data in the given system; and a setting unit for, if not, namely, the setting command is associated with common data in the given system and in other systems, then setting the common data in the given system and the other systems according to the setting command, wherein the other systems are at least one system in the plurality of systems other than the given system.

In this technical solution, if one of the plurality of systems receives the setting command which is a command not associated with the specified data in the given system, the setting command is a command associated with ordinary settings in the given system or the common data in the plurality of systems, and the setting command may be synchronized in all the systems containing the common data, such that the user does not have to perform a setting of each of different systems, so as to address the problem in which a common setting item, namely common data, cannot be completely synchronized, caused by the data in different systems being different. For example, if a system A, a system B and a system C are installed in a terminal and the user performs a setting of size of fonts (common data in the three systems) in the system A, the terminal may determine that the setting command is an ordinary setting command and is not associated with specific data in the system A, when receiving the setting command. At this time, the terminal may synchronize the setting of the size of the fonts in the system B and system C, such that the size of the fonts in the three systems seems identical.

In the above-mentioned technical solution, preferably, the setting unit is further for setting the specified data according to the setting command, if determining that the setting command is a command associated with the specified data in the given system.

In this technical solution, if the setting command is a command associated with the specified data in the given system, the terminal may merely perform a special setting of the specific data (for example, unique data such as contact information, communication records and so on in the given system) in the given system, instead of synchronizing the setting command in the other systems, so as to ensure that the user may perform a special setting of the specific data in the given system and the different usage requirement of the user on different systems is met.

In the above-mentioned technical solution, preferably, the determination unit is specifically for determining whether the setting command is a command associated with the specified data in the given system, according to identification information contained in the setting command.

In this technical solution, by means of the identification information contained in the setting command, a necessary basis is provided for accurately determining whether the setting command is a command associated with the specified data in the given system, and in turn, a basis is provided for determining whether to synchronize the setting command in the other systems. The identification information may be an identifier for identifying the common data and the specified data, or may be an identifier for identifying a system which the data belongs to, so as to indicate the type of the setting command.

In the above-mentioned technical solution, preferably, the determination unit is further for determining whether the given system has a security level lower than that of any other system in the plurality of systems, when performing a setting of each of the plurality of systems according to the setting command; a prompting unit is for if so, prompting the terminal user whether to perform a setting of the any other system according to the setting command.

In this technical solution, if the security of the given system is lower than that of the any other system when setting each system according to the setting command, it is required to give a prompting signal to the terminal user before the setting command is applied in the any other system, such that the user determines again whether to apply the setting command in the any other system, so as to prevent the security of a system having a higher security level from being affected due to applying the setting of a system having a lower security level in the system having a higher security level. For example, if a setting of the given system, with the result that a password is not required when accessing the system, is performed in the terminal, the terminal may determine that the setting command is an ordinary setting command not associated with the specified data in the given system, and synchronize the setting command in the other systems. However, if the security level of the any other system is higher than that of the given system, the terminal will give a prompting signal to the user, such that the user determines whether to apply the setting command in the any other system, so as to prevent the security of the any other system from being damaged.

In the above-mentioned technical solution, preferably, an updating unit is for updating the specified data according to the received updating command.

In this technical solution, the user may freely update the specified data in the given system and this is advantageous for improving the using experience of the user.

According to yet another aspect of the present disclosure, a terminal comprising the device for setting system data according to any one of the above-mentioned technical solutions is provided.

In this technical solution, the device for setting system data enables a user to perform a special setting of the specific data in different systems, and addresses the problem in which a common setting item and data cannot be completely synchronized, caused by the data in different systems being different.

The technical solution of the present disclosure enables a user to perform a special setting of the specific data in different systems, and addresses the problem in which a common setting item, namely common data, cannot be completely synchronized, caused by the data in different systems being different.

### BRIEF DESCRIPTION OF DRAWINGS

Fig. 1 shows a schematic flowchart diagram of a method for setting system data according to an embodiment of the present disclosure;
Fig. 2 shows a schematic flowchart diagram of a method for setting system data according to another embodiment of the present disclosure;
Fig. 3 shows a schematic structural diagram of a device for setting system data according to an embodiment of the present disclosure;
Fig. 4 shows a schematic structural diagram of a terminal according to an embodiment of the present disclosure.

### DETAILED DESCRIPTION

The present disclosure is further described in detail hereinafter with reference to the accompanying drawings and embodiments, in order to more fully understand the above-mentioned purposes, features and advantages of the present disclosure. It should be noted that, when not conflicting, the embodiments of the present application and features in the embodiments could be combined mutually.

A lot of details are set forth in the below description so as to fully understand the present disclosure, however, the present disclosure may also be implemented by adopting other embodiments different from those as described herein, and therefore, the protection scope of the present disclosure is not limited by the embodiments disclosed below.

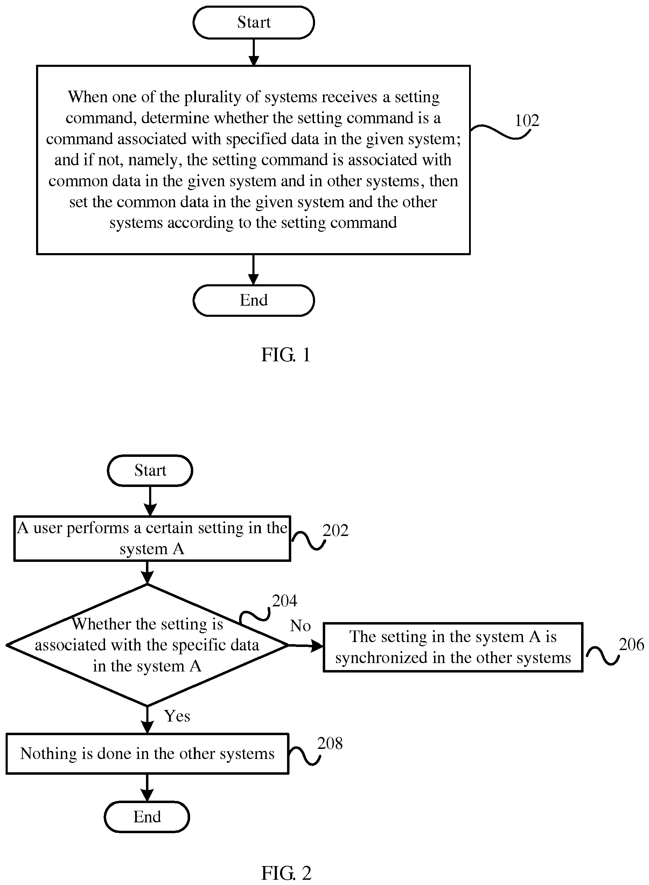

Fig. 1 shows a schematic flowchart diagram of a method for setting system data according to an embodiment of the present disclosure.

As shown in Fig. 1, a method for setting system data according to an embodiment of the present disclosure, comprises: a step 102 of, when one of a plurality of systems receives a setting command, determining whether the setting command is a command associated with specified data in the given system; and if not, namely, the setting command is associated with common data in the given system and in other systems, then setting the common data in the given system and the other systems according to the setting command, wherein the other systems are at least one system in the plurality of systems other than the given system.

In this technical solution, if one of the plurality of systems receives the setting command which is a command not associated with the specified data in the given system, the setting command is a command associated with ordinary settings in the given system or the common data in the plurality of systems, and the setting command may be synchronized in all the systems containing the common data, such that the user does not have to perform a setting of each of different systems, so as to address the problem in which a common setting item, namely common data, cannot be completely synchronized, caused by the data in different systems being different. For example, if a system A, a system B and a system C are installed in a terminal and the user performs a setting of size of fonts (common data in the three systems) in the system A, the terminal may determine that the setting command is an ordinary setting command and is not associated with specific data in the system A, when receiving the setting command. At this time, the terminal may synchronize the setting of the size of the fonts in the system B and system C, such that the size of the fonts in the three systems seems identical.

In the above-mentioned technical solution, preferably, if determining that the setting command is a command associated with the specified data in the given system, the specified data is set according to the setting command.

In this technical solution, if the setting command is a command associated with the specified data in the given system, the terminal may merely perform a special setting of the specific data (for example, unique data such as contact information, communication records and so on in the given system) in the given system, instead of synchronizing the setting command in the other systems, so as to ensure that the user may perform a special setting of the specific data in the given system and the different usage requirement of the user on different systems is met.

In the above-mentioned technical solution, preferably, determining whether the setting command is a command associated with the specified data in the given system specifically comprises: determining whether the setting command is a command associated with the specified data in the given system, according to identification information contained in the setting command.

In this technical solution, by means of the identification information contained in the setting command, a necessary basis is provided for accurately determining whether the setting command is a command associated with the specified data in the given system, and in turn, a basis is provided for determining whether to synchronize the setting command in the other systems. The identification information may be an identifier for identifying the common data and the specified data, or may be an identifier for identifying a system which the data belongs to, so as to indicate the type of the setting command.

In the above-mentioned technical solution, preferably, it is determined whether the given system has a security level lower than that of any other system in the plurality of systems, when performing a setting of each of the plurality of systems according to the setting command. And if so, the terminal user is prompted whether to perform a setting of the any other system according to the setting command.

In this technical solution, if the security of the given system is lower than that of the any other system when setting each system according to the setting command, it is required to give a prompting signal to the terminal user before the setting command is applied in the any other system, such that the user determines again whether to apply the setting command in the any other system, so as to prevent the security of a system having a higher security level from being affected due to applying the setting of a system having a lower security level in the system having a higher security level. For example, if a setting of the given system, with the result that a password is not required when accessing the system, is performed in the terminal, the terminal may determine that the setting command is an ordinary setting command not associated with the specified data in the given system, and synchronize the setting command in the other systems. However, if the security level of the any other system is higher than that of the given system, the terminal will give a prompting signal to the user, such that the user determines whether to apply the setting command in the any other system, so as to prevent the security of the any other system from being damaged.

In the above-mentioned technical solution, preferably, the specified data is updated according to the received updating command.

In this technical solution, the user may freely update the specified data in the given system and this is advantageous for improving the using experience of the user.

Fig. 2 shows a schematic flowchart diagram of a method for setting system data according to another embodiment of the present disclosure.

As shown in Fig. 2, a method for setting system data according to another embodiment of the present disclosure, comprises:
Step 202: A user performs a certain setting in the system A.
Step 204: Whether the setting is associated with the specific data (specified data) in the system A is determined; if so, Step 208 is performed; otherwise, Step 206 is performed.
Step 206: the setting in the system A is synchronized in the other systems.
Step 208: Nothing is done in the other systems.

For example, assuming that the system A (ordinary system) and the system B (secure system) are installed in the terminal, since secure contacts are all stored in the secure system and ordinary contacts are stored in the ordinary system without sharing with each other, the secure contacts are the special data in the secure system and the ordinary contacts are the special data in the ordinary system. When the user adds an ordinary contact in a white list in the ordinary system, this operation is associated with the special data in the secure system, and thus the white list data in the ordinary system is changed after adding, while the white list data in the secure system remains the same. However, if the user adjusts a non-disturbing period (in this period, only calls or messages from the contacts in the white list are allowed to be received) in the ordinary system from 23:00-08:00 to 22:00-7:30, a non-disturbing period in the secure system should also be adjusted accordingly.

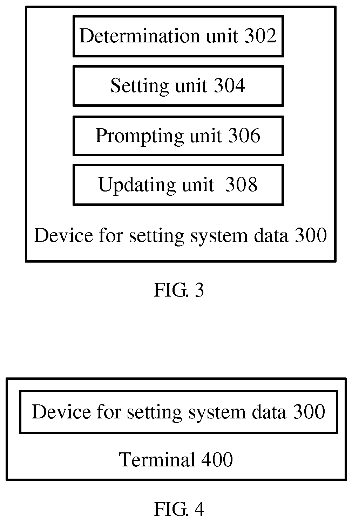

Fig. 3 shows a schematic structural diagram of a device for setting system data according to an embodiment of the present disclosure.

As shown in Fig. 3, a device 300 for setting system data according to an embodiment of the present disclosure, comprises: a determination unit 302 for, when one of a plurality of systems receives a setting command, determining whether the setting command is a command associated with specified data in the given system; and a setting unit 304 for, if not, namely, the setting command is associated with common data in the given system and in other systems, then setting the common data in the given system and the other systems according to the setting command, wherein the other systems are at least one system in the plurality of systems other than the given system.

In this technical solution, if one of the plurality of systems receives the setting command which is a command not associated with the specified data in the given system, the setting command is a command associated with ordinary settings in the given system or the common data in the plurality of systems, and the setting command may be synchronized in all the systems containing the common data, such that the user does not have to perform a setting of each of different systems, so as to address the problem in which a common setting item, namely common data, cannot be completely synchronized, caused by the data in different systems being different. For example, if a system A, a system B and a system C are installed in a terminal and the user performs a setting of size of fonts (common data in the three systems) in the system A, the terminal may determine that the setting command is an ordinary setting command and is not associated with specific data in the system A, when receiving the setting command. At this time, the terminal may synchronize the setting of the size of the fonts in the system B and system C, such that the size of the fonts in the three systems seems identical.

In the above-mentioned technical solution, preferably, the setting unit 304 is further for setting the specified data according to the setting command, if determining that the setting command is a command associated with the specified data in the given system.

In this technical solution, if the setting command is a command associated with the specified data in the given system, the terminal may merely perform a special setting of the specific data (for example, unique data such as contact information, communication records and so on in the given system) in the given system, instead of synchronizing the setting command in the other systems, so as to ensure that the user may perform a special setting of the specific data in the given system and the different usage requirement of the user on different systems is met.

In the above-mentioned technical solution, preferably, the determination unit 302 is specifically for determining whether the setting command is a command associated with the specified data in the given system, according to identification information contained in the setting command.

In this technical solution, by means of the identification information contained in the setting command, a necessary basis is provided for accurately determining whether the setting command is a command associated with the specified data in the given system, and in turn, a basis is provided for determining whether to synchronize the setting command in the other systems. The identification information may be an identifier for identifying the common data and the specified data, or may be an identifier for identifying a system which the data belongs to, so as to indicate the type of the setting command.

In the above-mentioned technical solution, preferably, the determination unit 302 is further for determining whether the given system has a security level lower than that of any other system in the plurality of systems, when performing a setting of each of the plurality of systems according to the setting command; a prompting unit 306 is for if so, prompting the terminal user whether to perform a setting of the any other system according to the setting command.

In this technical solution, if the security of the given system is lower than that of the any other system when setting each system according to the setting command, it is required to give a prompting signal to the terminal user before the setting command is applied in the any other system, such that the user determines again whether to apply the setting command in the any other system, so as to prevent the security of a system having a higher security level from being affected due to applying the setting of a system having a lower security level in the system having a higher security level. For example, if a setting of the given system, with the result that a password is not required when accessing the system, is performed in the terminal, the terminal may determine that the setting command is an ordinary setting command not associated with the specified data in the given system, and synchronize the setting command in the other systems. However, if the security level of the any other system is higher than that of the given system, the terminal will give a prompting signal to the user, such that the user determines whether to apply the setting command in the any other system, so as to prevent the security of the any other system from being damaged.

In the above-mentioned technical solution, preferably, an updating unit 308 is for updating the specified data according to the received updating command.

In this technical solution, the user may freely update the specified data in the given system and this is advantageous for improving the using experience of the user.

Fig. 4 shows a schematic structural diagram of a terminal according to an embodiment of the present disclosure.

As shown in Fig. 4, a terminal 400 according to an embodiment of the present disclosure comprises: the device 300 for setting system data according to any one of the above-mentioned technical solutions.

In this technical solution, the device 300 for setting system data enables a user to perform a special setting of the specific data in different systems, and addresses the problem in which a common setting item and data cannot be completely synchronized, caused by the data in different systems being different.

The technical solution of the present disclosure is described in detail in conjunction with the accompanying drawings, hereinbefore. The technical solution of the present disclosure enables a user to perform a special setting of the specific data in different systems, and addresses the problem in which a common setting item and data cannot be completely synchronized, caused by the data in different systems being different.

The foregoing is merely the preferred embodiments of the present disclosure, and is not intended to limit the present disclosure. For persons skilled in the art, the present disclosure could have various modifications and variations. Any amendments, equivalents, or improvements and so on within the spirit and principle of the present disclosure should be included within the protection scope of the present disclosure.

## Claims

1. A method for setting system data, used in a terminal, wherein a plurality of systems are installed in the terminal, and the method comprises:
when one of the plurality of systems receives a setting command, determining whether the setting command is a command associated with specified data in the given system; and
if not, namely, the setting command is associated with common data in the given system and in other systems, then setting the common data in the given system and the other systems according to the setting command, wherein the other systems are at least one system in the plurality of systems other than the given system.

2. The method for setting system data according to claim 1, comprising:
setting the specified data according to the setting command, if determining that the setting command is a command associated with the specified data in the given system.

3. The method for setting system data according to claim 1, wherein determining whether the setting command is a command associated with the specified data in the given system, comprises:
determining whether the setting command is a command associated with the specified data in the given system, according to identification information contained in the setting command.

4. The method for setting system data according to claim 1, comprising:
determining whether the given system has a security level lower than that of any other system in the plurality of systems, when performing a setting of each of the plurality of systems according to the setting command; and
if so, prompting the terminal user whether to perform a setting of the any other system according to the setting command.

5. The method for setting system data according to any one of claims 1 to 4, comprising:
updating the specified data according to the received updating command.

6. A device for setting system data, used in a terminal, wherein a plurality of systems are installed in the terminal, and the device comprises:
a determination unit for, when one of the plurality of systems receives a setting command, determining whether the setting command is a command associated with specified data in the given system; and
a setting unit for, if not, namely, the setting command is associated with common data in the given system and in other systems, then setting the common data in the given system and the other systems according to the setting command, wherein the other systems are at least one system in the plurality of systems other than the given system.

7. The device for setting system data according to claim 6, wherein the setting unit is further for setting the specified data according to the setting command, if determining that the setting command is a command associated with the specified data in the given system.

8. The device for setting system data according to claim 6, wherein the determination unit is for determining whether the setting command is a command associated with the specified data in the given system, according to identification information contained in the setting command.

9. The device for setting system data according to claim 6, wherein
the determination unit is further for determining whether the given system has a security level lower than that of any other system in the plurality of systems, when performing a setting of each of the plurality of systems according to the setting command; and
a prompting unit is for if so, prompting the terminal user whether to perform a setting of the any other system according to the setting command.

10. A terminal comprising: the device for setting system data according to any one of claims 6 to 9.
